# FASCICULE DE BREVET EUROPEEN

(11) **EP 3 694 769 B1**
(45) Date de publication et mention de la délivrance du brevet: **16.08.2023**
(21) Numéro de dépôt: 18735679.5
(22) Date de dépôt: 15.06.2018
(51) Int. Cl.: B62D 25/08, B62D 25/20, B62D 21/15

(54) **STRUCTURE DE PARTIE ARRIÈRE DE CAISSE DE VÉHICULE AUTOMOBILE**
STRUKTUR DES HINTEREN TEILS DER KAROSSERIE EINES KRAFTFAHRZEUGS
STRUCTURE OF REAR PART OF MOTOR VEHICLE BODY

(30) Priorité: 19.09.2017 FR 1758642
(43) Date de publication de la demande: 19.08.2020
(73) Titulaire: Renault s.a.s, 92100 Boulogne Billancourt (FR)
(72) Inventeur: DUONG, Olivier, 95610 ERAGNY SUR OISE (FR)
(74) Mandataire: Renault Group
(86) Numéro de dépôt international: PCT/FR2018/051422
(87) Numéro de publication internationale: WO 2019/058037

(56) Documents cités:
- WO-A1-2011/013634
- JP-A- 2007 161 074
- US-A1- 2011 121 597

## Description

La présente invention concerne une structure de partie arrière de caisse de véhicule automobile comprenant un plancher arrière de caisse agencé entre un premier longeronnet latéral et un deuxième longeronnet latéral s'étendant dans la direction longitudinale du véhicule, ladite structure comprenant en outre un longeronnet central s'étendant sur le plancher arrière de caisse dans la direction longitudinale du véhicule, pour la fixation d'un troisième rang de sièges du véhicule.

Certains véhicules automobiles de type monospace sont en effet du type à trois rangs d'assise et sont donc équipés d'un troisième rang de sièges fixé sur le longeronnet central en partie arrière de la caisse du véhicule.

On connaît par ailleurs certains véhicules de type véhicule hybride (véhicules dits HEV « Hybrid Electric Véhicule » ou PHEV « Plug-in Hybrid Electric Vehicle » en terminologie anglo-saxonne), qui comprennent un petit dispositif électrique, désigné par l'acronyme anglais « SED » (pour « Small Electric Device »).

Un tel dispositif SED comprend une machine électrique embarquée dans le véhicule, qui peut réaliser une ou plusieurs des fonctions suivantes telle que apporter une puissance et un couple d'assistance au moteur thermique du véhicule, notamment dans les phases de démarrage, décollage et roulage, généralement à bas régime et/ou faible vitesse, ou encore apporter l'énergie nécessaire au redémarrage du moteur thermique après un arrêt temporaire (fonction appelée « stop and start » en terminologie anglo-saxonne). Le dispositif électrique SED est disposé dans le compartiment moteur et est alimenté en électricité par une batterie d'alimentation située à l'arrière du véhicule, typiquement une batterie 48 volts. Un espace doit donc être prévu pour l'implantation du dispositif électrique et en particulier pour l'implantation de sa batterie d'alimentation et du groupe moto-ventilateur nécessaire au refroidissement de la batterie, au niveau du plancher arrière de caisse du véhicule.

Dans les véhicules à 5 places, il est connu d'implanter la batterie dans une région en arrière du dossier de la banquette arrière du véhicule, constituant le deuxième rang de sièges du véhicule, par exemple en partie avant du plancher arrière de la structure de caisse.

On connaît également les documents JP 2007 161074 A et US 2011/121597 A1 décrivant des structures de partie arrière de caisse de véhicule automobile.

Cependant, pour les véhicules de type à trois rangs d'assise tels que décrits plus haut, L'intégration de la batterie et du groupe moto-ventilateur associé à la batterie au niveau du plancher arrière de la caisse est rendue difficile en raison du peu d'espace disponible.

Il existe donc un besoin pour une structure de partie arrière de caisse pour un véhicule automobile de type à moteur thermique complété d'un dispositif SED, qui soit capable d'accueillir la batterie et le groupe moto-ventilateur du dispositif SED, tout en conservant la possibilité de bénéficier d'une troisième rangée de sièges.

Ce but est atteint grâce à une structure de partie arrière de caisse de véhicule automobile comprenant un plancher arrière de caisse agencé entre un premier longeronnet latéral et un deuxième longeronnet latéral s'étendant dans la direction longitudinale du véhicule, ladite structure comprenant en outre un longeronnet central s'étendant sur le plancher arrière de caisse dans la direction longitudinale du véhicule pour la fixation d'un troisième rang de sièges du véhicule, caractérisée en ce que ledit plancher arrière est du type comprenant une cuvette de réception d'une roue de secours du véhicule, s'étendant dans ledit plancher arrière sensiblement au droit dudit premier longeronnet latéral et au-dessus de laquelle s'étend ledit longeronnet central monté par ses extrémités respectives sur des bords opposés de ladite cuvette, ledit longeronnet central comprenant une première pièce d'interface présentant au moins une surface en saillie latérale adaptée pour servir de premier support de fixation pour une batterie d'alimentation d'un dispositif électrique du véhicule destinée à être logée dans ladite cuvette, et une deuxième et une troisième pièces d'interface, ladite troisième pièce d'interface étant disposée à l'opposée de ladite première pièce d'interface par rapport à ladite deuxième pièce d'interface, lesdites deuxième et troisième pièces d'interface présentant des surfaces respectives en saillie latérale adaptées pour servir de premier support de fixation pour un groupe moto-ventilateur associé à ladite batterie, destiné à être logé ensemble avec ladite batterie dans ladite cuvette.

Avantageusement, ladite structure de partie arrière de caisse comprend une quatrième pièce d'interface adaptée pour être montée en appui sur ledit premier longeronnet latéral et présentant au moins une surface s'étendant vers le centre de ladite cuvette de façon au moins partiellement coplanaire avec ladite surface en saillie latérale de ladite première pièce d'interface et adaptée pour servir de deuxième support de fixation pour ladite batterie, opposé audit premier support de fixation pour ladite batterie.

Avantageusement, ladite au moins une surface de la quatrième pièce d'interface est adaptée pour servir de deuxième support de fixation pour le groupe moto-ventilateur, opposé audit premier support de fixation pour ledit groupe moto-ventilateur.

Avantageusement, ladite deuxième pièce d'interface est constituée d'un pontet comprenant des parois latérales s'étendant transversalement audit longeronnet central et réunies par une paroi de fond constituant ladite surface en saillie latérale de ladite deuxième pièce d'interface, ledit pontet étant fixé sur une face inférieure dudit longeronnet central en regard de ladite cuvette, la concavité dudit pontet étant orientée vers ladite face inférieure dudit longeronnet central, de sorte à procurer un chemin de guidage de câbles.

De préférence, ledit pontet fait saillie latéralement des deux côtés dudit longeronnet central.

Avantageusement, ladite quatrième pièce d'interface comporte une surface montée en appui sur ledit premier longeronnet latéral, ladite surface étant pourvue de moyens de fixation dudit troisième rang de sièges du véhicule.

L'invention concerne également un véhicule automobile comprenant au moins un dispositif électrique positionné dans un compartiment moteur du véhicule et alimenté par une batterie d'alimentation située à l'arrière du véhicule et à laquelle est associée un groupe moto-ventilateur pour le refroidissement de la batterie, caractérisé en ce que ledit véhicule est du type à trois rangs d'assise et comprend une structure de partie arrière de caisse tel que décrite ci-dessus.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :
- la figure 1 représente une vue en perspective d'une structure de partie arrière de caisse arrière d'un véhicule selon un mode de réalisation de l'invention ;
- la figure 2 est une vue isolée de leur environnement du longeronnet central équipé de ses trois pièces d'interface spécifiques, ainsi que de la quatrième pièce d'interface, tels que représentés à la figure 1 ;

Dans la présente description, les termes avant, arrière, font référence aux directions avant et arrière du véhicule. Les axes X, Y, Z, correspondent respectivement à l'axe longitudinal (orienté d'avant en arrière), transversal (orienté vers la droite) et vertical (orienté vers le haut) du véhicule.

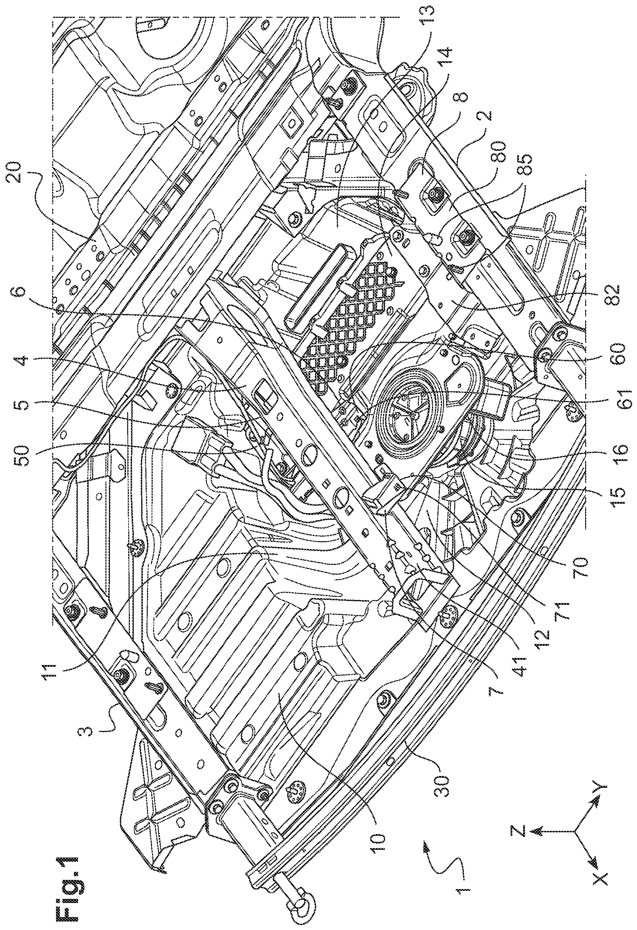

La figure 1 représente une structure 1 de partie arrière de caisse de véhicule automobile.

La structure 1 représentée sur la figure 1 est disposée entre des premier et deuxième longeronnets latéraux 2 et 3, qui s'étendent dans la direction longitudinale du véhicule, soit dans une direction suivant l'axe X, une traverse avant 20 et une traverse arrière 30, qui s'étendent dans la direction transversale du véhicule, soit dans une direction suivant l'axe Y, l'ensemble formant un cadre à l'arrière du châssis d'un véhicule automobile. Les éléments 2 et 3 et 20 et 30 définissent entre eux une ouverture correspondant au fond du coffre du véhicule. La structure 1 comprend un plancher arrière 10 agencé au travers de cette ouverture, dans lequel est formée une cuvette 11 de réception d'une roue de secours du véhicule, qui présente une concavité orientée vers le haut. La cuvette 11 de réception de roue de secours est partie intégrante du plancher arrière 10 et forme typiquement au moins en partie le plancher arrière du véhicule. Cette cuvette 11 comporte une paroi de fond 12, décalée vers le bas suivant l'axe Z par rapport au plancher arrière 10, et une paroi latérale cylindrique 13, lesquelles définissent un volume intérieur ouvert vers le haut, dont les dimensions sont adaptées pour recevoir une roue de secours du véhicule. La cuvette 11 est formée dans le plancher arrière 10 à proximité immédiate du premier longeronnet latéral 2, de sorte que le premier longeronnet latéral 2 est disposé sensiblement au droit d'une partie de la paroi latérale cylindrique 13 de la cuvette 11. Cette dernière s'étend dans le plancher arrière 10 depuis le premier longeronnet latéral 2 en direction du deuxième longeronnet latéral opposé 3. Le plancher arrière 10 accueille en outre, disposé dans sa partie médiane, un longeronnet central 4, qui est disposé entre les premier et deuxième longeronnets latéraux 2 et 3 et qui s'étend également dans la direction longitudinale du véhicule. Le longeronnet central 4 est fixé sur le plancher arrière 10 pour permettre la fixation d'un troisième rang de sièges du véhicule, destiné à être fixé par ailleurs de part et d'autre du plancher arrière 10 sur les longeronnets latéraux 2, 3. Le longeronnet central 4 est monté par ses extrémités respectives sur des bords opposés de la cuvette 11 de réception de roue de secours du véhicule, qui s'étend sous le longeronnet central 4. Autrement dit, le longeronnet central 4 s'étend longitudinalement à cheval au-dessus de la cuvette 11.

Cette configuration permet alors d'utiliser l'espace normalement dévolu à la roue de secours du véhicule dans le plancher arrière 10 du véhicule, soit la cuvette 11 de réception de roue de secours, pour y loger, en lieu et place de la roue de secours du véhicule, une batterie d'alimentation 14 adaptée pour l'alimentation d'un petit moteur électrique additionnel équipant le véhicule, ainsi qu'un groupe moto-ventilateur 15 associé à cette batterie 14. Selon un exemple de réalisation, la batterie 14 est disposée dans la cuvette 11 sensiblement à l'avant de celle-ci, l'axe longitudinal de la batterie 14 étant orienté selon la direction transversale Y du véhicule, une première partie d'extrémité de la batterie étant située du côté du premier longeronnet latéral 2 et une deuxième partie d'extrémité opposée de la batterie étant située du côté du longeronnet central 4. Le groupe moto-ventilateur 15 est disposé dans la cuvette 11 en arrière de la batterie 14.

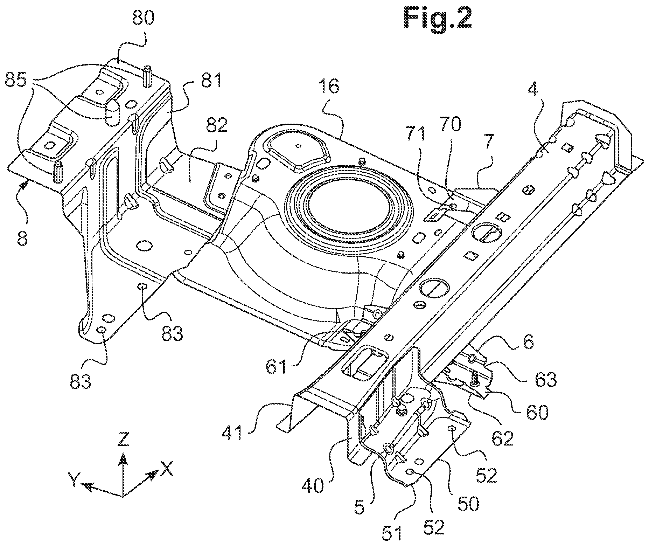

Comme il est mieux illustré à la figure 2, le longeronnet central 4 est adapté pour permettre la fixation de la batterie 14 et du groupe moto-ventilateur 15 dans la cuvette 11. En premier lieu, le longeronnet central 4 comprend une première pièce d'interface 5, qui présente une surface 50 en saillie latérale par rapport au longeronnet central 4 et qui est adaptée pour servir de premier support de fixation pour la batterie d'alimentation 14. Cette première pièce d'interface 5 est fixée, par exemple par soudage ou rivetage, sur une première paroi latérale 40 du longeronnet central 4 s'étendant en regard du deuxième longeronnet latéral 3, sensiblement en avant du longeronnet central 4, selon l'exemple de réalisation, et sa surface 50, adaptée à servir de premier support de fixation pour la batterie 14 logée dans la cuvette 11 en dessous du longeronnet central 4, fait donc saillie latéralement du longeronnet central 4 au-dessus de la cuvette 11 en regard du deuxième longeronnet latéral 3. Cette surface 50 s'étend dans un plan longitudinal transversal au dessus de la cuvette 11, de sorte qu'une face inférieure 51 de cette surface 50 de la première pièce d'interface 5 du longeronnet central 4 vienne épouser la surface supérieure sous-jacente de la batterie 14 au niveau de la deuxième partie d'extrémité de la batterie pour la fixation de la batterie à la caisse. Aussi, ladite surface 50 comporte au moins un orifice 52 pour le passage de vis de fixation à la batterie.

Par ailleurs, le longeronnet central 4 comporte également une deuxième et une troisième pièce d'interface, respectivement 6 et 7, la troisième pièce d'interface 7 étant disposée sur le longeronnet central 4 à l'opposée de la première pièce d'interface 5 servant de premier support de fixation pour la batterie 14 par rapport à la deuxième pièce d'interface 6, suivant l'axe longitudinal du longeronnet central 4. Ces deuxième et troisième pièces d'interface 6 et 7 présentent des surfaces respectives 60 et 70 en saillie latérale adaptées pour servir de premier support de fixation pour le groupe moto-ventilateur 15 de la batterie 14, logé en arrière de la batterie 14 dans la cuvette 11.

Plus précisément, la troisième pièce d'interface 7 est fixée, par exemple par soudage ou rivetage, sur une deuxième paroi latérale 41 du longeronnet central 4 à l'opposé de la première paroi latérale 40, soit la paroi latérale 41 en regard du premier longeronnet latéral 2, sensiblement en arrière du longeronnet central 4, et sa surface 70 adaptée à servir de support de fixation pour le groupe moto-ventilateur 15 logé dans la cuvette 11 fait donc saillie latéralement du longeronnet central 4 au-dessus de la cuvette 11 en regard du premier longeronnet latéral 2. Cette surface 70 s'étend dans un plan longitudinal transversal au dessus de la cuvette 11 de sorte qu'une face inférieure de cette surface 70 vienne épouser une partie d'une surface supérieure d'un support 16 du groupe moto-ventilateur 15. La surface 70 comprend au moins un point de fixation 71, par exemple un point par soudage ou rivetage, au support 16 du groupe moto-ventilateur.

La deuxième pièce d'interface 6 qui équipe le longeronnet central 4 pour la fixation du groupe moto-ventilateur 15 est quant à elle constituée d'un pontet fixé sur une face inférieure du longeronnet central 4 en regard de la cuvette 11, par exemple par soudage ou rivetage. Le pontet 6 comprend plus précisément des parois latérales 62, 63, qui s'étendent transversalement sous le longeronnet central 4 en regard l'une de l'autre, préférentiellement des deux côtés du longeronnet central 4, et qui sont réunies par une paroi de fond, s'étendant à distance du longeronnet central 4, qui constitue la surface 60 en saillie latérale adaptée pour permettre la fixation du groupe moto-ventilateur 15 et, en particulier du support 16 du groupe moto-ventilateur. Ainsi, la surface 60 comprend au moins un point de fixation 61, par exemple un point par soudage ou rivetage, au support 16 du groupe moto-ventilateur. La concavité du pontet 6 étant orientée vers la face inférieure du longeronnet central 4, cette pièce d'interface forme avantageusement un chemin de guidage de câble de part et d'autre du longeronnet central 4 dans l'espace réservé entre les parois latérales 62, 63 et la paroi de fond 60 du pontet 6 et la face inférieure du longeronnet central 4.

En outre, la structure 1 de la partie arrière de caisse comprend une quatrième pièce d'interface 8 montée en appui sur le premier longeronnet latéral 2 et qui destinée à servir de support de fixation pour la batterie 14 et le groupe moto-ventilateur 15 du côté opposé au longeronnet central 4, en coopération avec les moyens destinés à servir de support de fixation pour ces éléments prévus sur le longeronnet central 4, à savoir les première, deuxième et troisième pièces d'interface, respectivement 5, 6 et 7.

La quatrième pièce d'interface 8 comprend une première surface 80 fixée sur une face supérieure du premier longeronnet latéral 2, par exemple par soudage ou rivetage, une deuxième surface 81 s'étendant verticalement depuis la première surface 80 en épousant sensiblement une partie de la paroi latérale de la cuvette 11, et une troisième surface 82 s'étendant sensiblement perpendiculairement à la deuxième surface 81 vers le centre de la cuvette et adaptée à servir de deuxième support de fixation respectivement pour la batterie 14 et le groupe moto-ventilateur 15. Plus précisément, cette troisième surface 82 s'étend en partie vers l'avant de la cuvette 11 en regard et de façon coplanaire avec la surface 50 de la première pièce d'interface 5 faisant saillie latéralement du longeronnet central 4, de sorte qu'une face inférieure de cette troisième surface 82 vienne épouser la surface supérieure sous-jacente de la batterie 14 au niveau de la première partie d'extrémité de la batterie pour la fixation de la batterie à la caisse, côté premier longeronnet latéral 2. Aussi, ladite troisième surface 82 de la quatrième pièce d'interface 8 comporte au moins un orifice 83 pour le passage de vis de fixation à la batterie.

En outre, la troisième surface 82 s'étend en partie vers l'arrière de la cuvette 11 en regard des deuxième et troisième pièces d'interface 6, 7 du longeronnet central 4 et est adaptée pour servir de deuxième support de fixation pour le groupe moto-ventilateur et en particulier pour le support 16 du groupe moto-ventilateur, agencé entre les deuxième et troisième pièces d'interface 6, 7 du longeronnet central 4 et la quatrième pièce d'interface 8 du côté du premier longeronnet latéral 2. Aussi, la troisième surface 82 s'étend vers l'arrière de la cuvette 11 de sorte qu'une face inférieure de cette surface 82 vienne épouser une partie du support 16 du groupe moto-ventilateur 15. La surface 82 comprend au moins un et par exemple trois points de fixation 84, par exemple des points par soudage ou rivetage, au support 16 du groupe moto-ventilateur.

Par ailleurs, la première surface 80 de la quatrième pièce d'interface 8 montée en appui sur le premier longeronnet latéral 2 est munie de pions de fixation 85 faisant saillie verticalement adapté à la fixation latérale du troisième rang de sièges du véhicule.

Ainsi, on conserve la possibilité d'avoir des sièges en troisième rang dans le véhicule tout en permettant d'implanter la batterie du dispositif SED et le groupe moto-ventilateur associé à celle-ci sous les sièges du troisième rang, en partie arrière du véhicule, en utilisant un plancher arrière pourvu d'une cuvette de réception de roue de secours et un longeronnet central adapté pour la fixation de ces éléments, outre sa fonction de fixation du troisième rang de sièges.

## Revendications

1. Structure (1)de partie arrière de caisse de véhicule automobile comprenant un plancher arrière (10) de caisse agencé entre un premier longeronnet latéral (2) et un deuxième longeronnet latéral (3) s'étendant dans la direction longitudinale du véhicule, ladite structure comprenant en outre un longeronnet central (4) s'étendant sur le plancher arrière de caisse dans la direction longitudinale du véhicule pour la fixation d'un troisième rang de sièges du véhicule, **caractérisée en ce que** ledit plancher arrière est du type comprenant une cuvette (11) de réception d'une roue de secours du véhicule, s'étendant dans ledit plancher arrière (10) sensiblement au droit dudit premier longeronnet latéral (2) et au-dessus de laquelle s'étend ledit longeronnet central (4) monté par ses extrémités respectives sur des bords opposés de ladite cuvette (11), ledit longeronnet central (4) comprenant une première pièce d'interface (5) présentant au moins une surface (50) en saillie latérale adaptée pour servir de premier support de fixation pour une batterie d'alimentation (14) d'un dispositif électrique du véhicule destinée à être logée dans ladite cuvette, et une deuxième et une troisième pièces d'interface (6, 7), ladite troisième pièce d'interface (7) étant disposée à l'opposée de ladite première pièce d'interface (5) par rapport à ladite deuxième pièce d'interface (6), lesdites deuxième et troisième pièces d'interface présentant des surfaces respectives (60, 70) en saillie latérale adaptées pour servir de premier support de fixation pour un groupe moto-ventilateur (15) associé à ladite batterie, destiné à être logé ensemble avec ladite batterie dans ladite cuvette (11).

2. Structure de partie arrière de caisse selon la revendication 1, **caractérisée en ce qu'**elle comprend une quatrième pièce d'interface (8) adaptée pour être montée en appui sur ledit premier longeronnet latéral (2) et présentant au moins une surface (82) s'étendant vers le centre de ladite cuvette (11) de façon au moins partiellement coplanaire avec ladite surface (50) en saillie latérale de ladite première pièce d'interface (5) et adaptée pour servir de deuxième support de fixation pour ladite batterie (14), opposé audit premier support de fixation pour ladite batterie.

3. Structure de partie arrière de caisse selon la revendication 2, **caractérisée en ce que** ladite au moins une surface (82) de la quatrième pièce d'interface est adaptée pour servir de deuxième support de fixation pour le groupe moto-ventilateur (15), opposé audit premier support de fixation pour ledit groupe moto-ventilateur (15).

4. Structure de partie arrière de caisse selon l'une quelconque des revendications précédentes, **caractérisée en ce que** ladite deuxième pièce d'interface (6) est constituée d'un pontet comprenant des parois latérales (62, 63) s'étendant en regard l'une de l'autre transversalement audit longeronnet central (4) et réunies par une paroi de fond (60) constituant ladite surface en saillie latérale de ladite deuxième pièce d'interface (6), ledit pontet étant fixé sur une face inférieure dudit longeronnet central en regard de ladite cuvette, la concavité dudit pontet étant orientée vers ladite face inférieure dudit longeronnet central, de sorte à procurer un chemin de guidage de câbles.

5. Structure de partie arrière de caisse selon la revendication 4, **caractérisée en ce que** ledit pontet fait saillie latéralement des deux côtés dudit longeronnet central (4).

6. Structure de partie arrière de caisse selon l'une quelconque des revendication 2 à 5, **caractérisée en ce que** ladite quatrième pièce d'interface (8) comporte une surface (80) montée en appui sur ledit premier longeronnet latéral (2), ladite surface (80) étant pourvue de moyens de fixation (85) dudit troisième rang de sièges du véhicule sur sa partie.

7. Véhicule automobile comprenant au moins un dispositif électrique positionné dans un compartiment moteur du véhicule et alimenté par une batterie d'alimentation située à l'arrière du véhicule et à laquelle est associée un groupe moto-ventilateur pour le refroidissement de la batterie, **caractérisé en ce que** ledit véhicule est du type à trois rangs d'assise et comprend une structure de partie arrière de caisse selon l'une quelconque des revendications 1 à 6.

## Patentansprüche

1. Struktur (1) eines hinteren Teils der Karosserie eines Kraftfahrzeugs, umfassend einen hinteren Boden (10) der Karosserie, der zwischen einem ersten seitlichen Längsträger (2) und einem zweiten seitlichen Längsträger (3), die sich in der Längsrichtung des Fahrzeugs erstrecken, angeordnet ist, wobei die Struktur ferner einen mittleren Längsträger (4) umfasst, der sich über den hinteren Boden der Karosserie in der Längsrichtung des Fahrzeugs erstreckt, um eine dritte Sitzreihe des Fahrzeugs zu befestigen, **dadurch gekennzeichnet, dass** der hintere Boden von dem Typ ist, der eine Mulde (11) zur Aufnahme eines Reserverads des Fahrzeugs umfasst, die sich im hinteren Boden (10) im Wesentlichen unter dem ersten seitlichen Längsträger (2) erstreckt und über der sich der mittlere Längsträger (4) erstreckt, der mit seinen jeweiligen Enden an gegenüberliegenden Rändern der Mulde (11) montiert ist, wobei der mittlere Längsträger (4) Folgendes umfasst: ein erstes Schnittstellenteil (5), das mindestens eine seitliche vorstehende Fläche (50) aufweist, die dazu ausgelegt ist, als erste Befestigungshalterung für eine Batterie (14) zur Versorgung einer elektrischen Vorrichtung des Fahrzeugs zu dienen, die dazu bestimmt ist, in der Mulde untergebracht zu sein, und ein zweites und ein drittes Schnittstellenteil (6, 7), wobei das dritte Schnittstellenteil (7) gegenüber dem ersten Schnittstellenteil (5) in Bezug auf das zweite Schnittstellenteil (6) angeordnet ist, wobei das zweite und das dritte Schnittstellenteil jeweilige seitlich vorstehende Oberflächen (60, 70) aufweisen, die dazu ausgelegt sind, als erste Befestigungshalterung für einen der Batterie zugeordneten Lüftersatz (15) zu dienen, der dazu bestimmt ist, zusammen mit der Batterie in der Mulde (11) unterbracht zu sein.

2. Struktur eines hinteren Teils einer Karosserie nach Anspruch 1, **dadurch gekennzeichnet, dass** sie ein viertes Schnittstellenteil (8) umfasst, das dazu ausgelegt ist, in Anlage am ersten seitlichen Längsträger (2) montiert zu sein, und mindestens eine Fläche (82) aufweist, die sich zur Mitte der Mulde (11) hin zumindest teilweise koplanar mit der seitlich vorstehenden Fläche (50) des ersten Schnittstellenteils (5) erstreckt und dazu ausgelegt ist, als zweite Befestigungshalterung für die Batterie (14), gegenüber der ersten Befestigungshalterung für die Batterie zu dienen.

3. Struktur eines hinteren Teils einer Karosserie nach Anspruch 2, **dadurch gekennzeichnet, dass** die mindestens eine Fläche (82) des vierten Schnittstellenteils dazu ausgelegt ist, als zweite Befestigungshalterung für den Lüftersatz (15) gegenüber der ersten Befestigungshalterung für den Lüftersatz (15) zu dienen.

4. Struktur eines hinteren Teils einer Karosserie nach einem der vorangehenden Ansprüche, **dadurch gekennzeichnet, dass** das zweite Schnittstellenteil (6) aus einer Brücke gebildet ist, die Seitenwände (62, 63) umfasst, die sich einander gegenüber quer zum mittleren Längsträger (4) erstrecken und durch eine Bodenwand (60) verbunden sind, die die seitlich vorstehende Fläche des zweiten Schnittstellenteils (6) bildet, wobei die Brücke an einer Unterseite des mittleren Längsträgers gegenüber der Mulde befestigt ist, wobei die Konkavität der Brücke zur Unterseite des mittleren Längsträgers hin so ausgerichtet ist, dass ein Kabelführungsweg bereitgestellt wird.

5. Struktur eines hinteren Teils einer Karosserie nach Anspruch 4, **dadurch gekennzeichnet, dass** die Brücke seitlich von den beiden Seiten des mittleren Längsträgers (4) vorsteht.

6. Struktur eines hinteren Teils einer Karosserie nach einem der Ansprüche 2 bis 5, **dadurch gekennzeichnet, dass** das vierte Schnittstellenteil (8) eine Fläche (80) aufweist, die in Anlage am ersten seitlichen Längsträger (2) montiert ist, wobei die Fläche (80) mit Mitteln (85) zur Befestigung der dritten Sitzreihe des Fahrzeugs an ihrem Teil versehen ist.

7. Kraftfahrzeug, umfassend mindestens eine elektrische Vorrichtung, die in einem Motorraum des Fahrzeugs positioniert ist und durch eine Versorgungsbatterie versorgt wird, die sich im hinteren Bereich des Fahrzeugs befindet und der ein Lüftersatz zum Kühlen der Batterie zugeordnet ist, **dadurch gekennzeichnet, dass** das Fahrzeug vom Typ mit drei Sitzreihen ist und eine Struktur eines hinteren Teils der Karosserie nach einem der Ansprüche 1 bis 6 umfasst.

## Claims

1. Motor vehicle body rear part structure (1) comprising a body rear floor (10) arranged between a first lateral longitudinal member (2) and a second lateral longitudinal member (3) extending in the longitudinal direction of the vehicle, said structure further comprising a central longitudinal member (4) extending on the body rear floor in the longitudinal direction of the vehicle for fastening a third row of seats of the vehicle, **characterized in that** said rear floor is of the type comprising a well (11) for receiving a spare wheel of the vehicle, extending in said rear floor (10) substantially in line with said first lateral longitudinal member (2) and above which extends said central longitudinal member (4) mounted by its respective ends on opposite edges of said well (11), said central longitudinal member (4) comprising a first interface part (5) having at least one laterally projecting surface (50) designed to serve as first fastening support for a supply battery (14) of an electrical device of the vehicle, said battery being intended to be housed in said well, and second and third interface parts (6, 7), said third interface part (7) being arranged on the opposite side of said first interface part (5) with respect to said second inface part (6), said second and third interface parts having respective laterally projecting surfaces (60, 70) designed to serve as first fastening support for a motorized fan unit (15) associated with said battery and intended to be housed together with said battery in said well (11).

2. Body rear part structure according to Claim 1, **characterized in that** it comprises a fourth interface part (8) designed to be mounted to bear on said first lateral longitudinal member (2) and having at least one surface (82) extending towards the centre of said well (11) so as to be at least partially coplanar with said laterally projecting surface (50) of said first interface part (5) and designed to serve as second fastening support for said battery (14), opposite to said first fasting support for said battery.

3. Body rear part structure according to Claim 2, **characterized in that** said at least one surface (82) of the fourth interface part is designed to serve as second fastening support for the motorized fan unit (15), opposite to said first fastening support for said motorized fan unit (15).

4. Body rear part structure according to any one of the preceding claims, **characterized in that** said second interface part (6) is formed by a bridge comprising lateral walls (62, 63) extending facing one another transversely to said central longitudinal member (4) and joined by a bottom wall (60) constituting said laterally projecting surface of said second interface part (6), said bridge being fastened to a lower face of said central longitudinal member facing said well, the concavity of said bridge being oriented towards said lower face of said central longitudinal member so as to provide a guide way for cables.

5. Body rear part structure according to Claim 4, **characterized in that** said bridge projects laterally from the two sides of said central longitudinal member (4).

6. Body rear part structure according to any one of Claims 2 to 5, **characterized in that** said fourth interface part (8) comprises a surface (80) mounted to bear on said first lateral longitudinal member (2), said surface (80) being provided with means (85) for fastening said third row of seats of the vehicle on its part.

7. Motor vehicle comprising at least one electrical device positioned in an engine compartment of the vehicle and supplied by a supply battery situated to the rear of the vehicle and with which there is associated a motorized fan unit for cooling the battery, **characterized in that** said vehicle is of the type with three seat rows and comprises a body rear part structure according to any one of Claims 1 to 6.
